# EUROPEAN PATENT SPECIFICATION

(11) **EP 0 480 887 B1**
(45) Date of publication and mention of the grant of the patent: **30.08.1995**
(21) Application number: 91830417.1
(22) Date of filing: 08.10.1991
(51) Int. Cl.: B60K 17/16

(54) **A rear axle for transmitting the driving torque to the rear wheels of a motor vehicle with disengageable four-wheel drive**
Eine Hinterradachse zur Übertragung des Antriebsmomentes zu den Hinterrädern eines Kraftfahrzeuges mit abschaltbarem Vierradantrieb
Essieu arrière pour la transmission du couple matrice aux roues arrières d'un vehicule à quatre roues motrices debrayable

(30) Priority: 12.10.1990 IT 6777790
(43) Date of publication of application: 15.04.1992
(73) Proprietor: FIAT AUTO S.p.A., 10135 Torino (IT)
(72) Inventor: Falzoni, Gian Luigi, I-10141 Torino (IT)
(74) Representative: Quinterno, Giuseppe

(56) References cited:
- EP-A- 0 204 665

## Description

The present invention relates in general to motor vehicles with four-wheel drive which have permanent front-wheel drive and disengageable rear-wheel drive.

More particularly, the invention relates to a rear axle for transmitting the driving torque to the rear wheels of such a vehicle, of the type including a differential for dividing the drive between the rear wheels, an input shaft for rotating the differential by means of a pair of bevel gears, means for engaging and disengaging the driving torque for transmission to the differential by the input shaft, and a casing which houses the differential and the pair of bevel gears and has a tubular front appendage for supporting the input shaft for rotation and two annular side bosses for the connection of the differential to the drive shafts of the rear wheels.

According to the prior art, rear axles of this type may be connected to the load-bearing structure of the vehicle by means of its suspension members in two different configurations in which the axle is rigid or in which the wheels are independent with floating drive shafts, respectively. In the first case, the two rear-wheel drive shafts are connected directly for rotation with the differential and, as regards the oscillations of the suspension, form a rigid unit therewith whilst, in the second case, the two drive shafts are connected for rotation with the differential by means of respective universal joints and can thus oscillate independently.

The two different systems for connecting the drive shafts involve the need for the side bosses of the axle casing to have different shapes so as, in the first case, to be suitable for the fixing of the respective tubular supports for the drive shafts and, in the second case, to enable rotatable output members, which connect the couplings of the floating drive shafts to the differential, to extend sealingly through them.

For this reason, casings suitable for one of the configurations of the axle are not conventionally used for the other configuration, which means that it is necessary to provide casings of different shapes with resulting complications and structural difficulties.

In order to avoid this problem, the subject of the present invention is an axle of the type defined at the beginning, characterised in that interchangeable annular attachments of a first type and a second type respectively are provided which can be fixed selectively to the side bosses of the casing and enable the casing to be used equally well for the rigid configuration of the axle and for the configuration with independent wheel suspension.

The same casing is suitable for use with different systems for engaging and disengaging the rear-wheel drive: if the differential is of the epicyclic type with bevel gears, the system, which conveniently is associated with the input shaft of the axle, may be of the type with a toothed coupling, an electromagnetic coupling, an electronically-controlled hydraulic friction clutch or even a viscous coupling. Alternatively, the engagement and disengagement system may be constituted by a differential with a viscous coupling of the "torque splitter" type.

The invention will now be described in detail with reference to the appended drawings, provided purely by way of non-limiting example, in which:
Figure 1 is a partial, schematic, horizontal, sectional view of a rear axle according to a first embodiment of the invention, and
Figures 2 to 5 are views similar to Figure 1 of respective alternative embodiments of the invention.

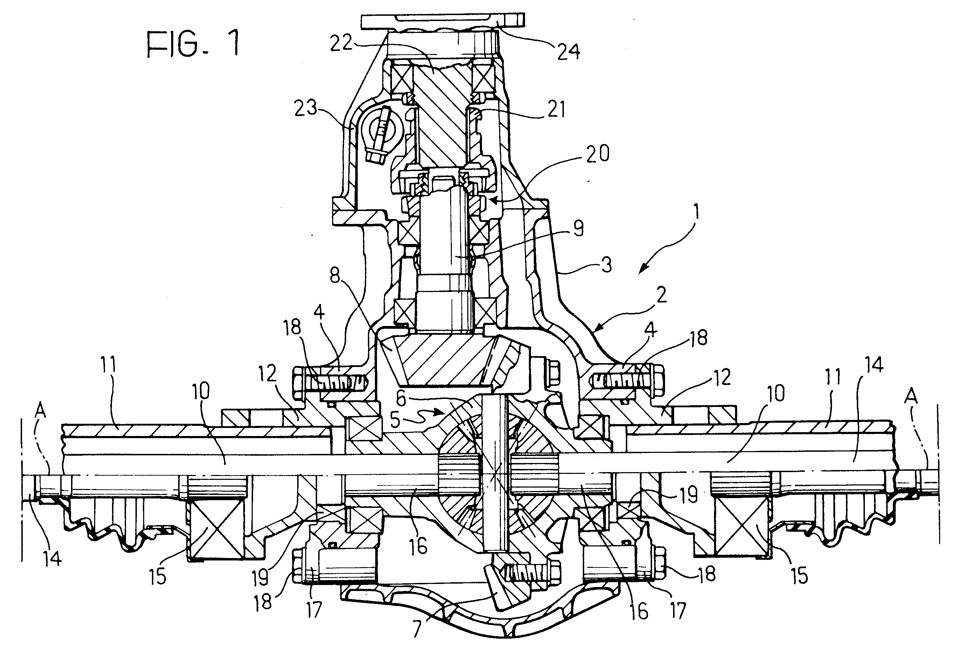

With reference initially to Figure 1, a rear axle for transmitting the driving torque from a longitudinal propeller shaft (not shown) to the rear wheels (not shown) of a motor vehicle with disengageable four-wheel drive and permanent front-wheel drive is generally indicated 1.

Essentially, the axle 1 includes a casing 2 with a front tubular appendage 3 for the input of the drive from the propeller shaft and two annular side bosses 4 for the output of the drive to the rear wheels of the vehicle.

Within the casing 2, between the annular bosses 4, is an epicyclic differential 5 with bevel gears, the housing 6 of which carries a crown wheel 7 meshed with a bevel pinion 8 which is disposed on the inner end of an input shaft 9 supported for rotation by the front tubular appendage 3.

The casing 2 can be used equally well either in a rigid configuration of the axle 1, which is shown in the region of Figure 1 above the central horizontal axis A of the differential 5, or in a configuration with independent wheels, which is shown in the region of Figure 1 below the central axis A. In the first case, the rear-wheel drive shafts, indicated 10, are coupled directly for rotation with the differential 5 and extend axially within respective tubular supports 11 which are fixed to the casing 2 by means of respective annular attachments 12 of a first type, which are connected coaxially to the side bosses 4 by means of screws 18. The inner ends of the attachments 12 are also used for supporting the housing 6 of the differential 5 for rotation.

In the second case, the rear-wheel drive shafts, indicated 14, are connected for rotation, by means of respective constant-velocity joints 15, to a pair of output shafts 16 which in turn are connected directly for rotation with the differential 5. In this case, the attachments 12 of the first type are replaced by annular attachments 17 of a second type which are fixed to the two side bosses 4 by means of the same screws 18 and through which the output shafts 16 extend with the interposition of seals 19. The attachments 17 of the second type also support the housing 6 of the differential 5 for rotation.

For the engagement and disengagement of the driving torque for transmission to the rear-wheel drive shafts 10 or 14, the embodiment of Figure 1 has a toothed coupling 20 of known type associated with a sleeve 21 which is slidable on an intermediate shaft 22 aligned with the outer end of the input shaft 9 and supported for rotation by a hollow body 23 fixed to the front appendage 3 of the casing 1. The shaft 22 has a flange 24 outside the hollow body 23 for its connection for rotation with the propeller shaft.

Clearly, the driving torque is transmitted to the drive-shafts 10 or 14 only when the toothed coupling 20 is engaged.

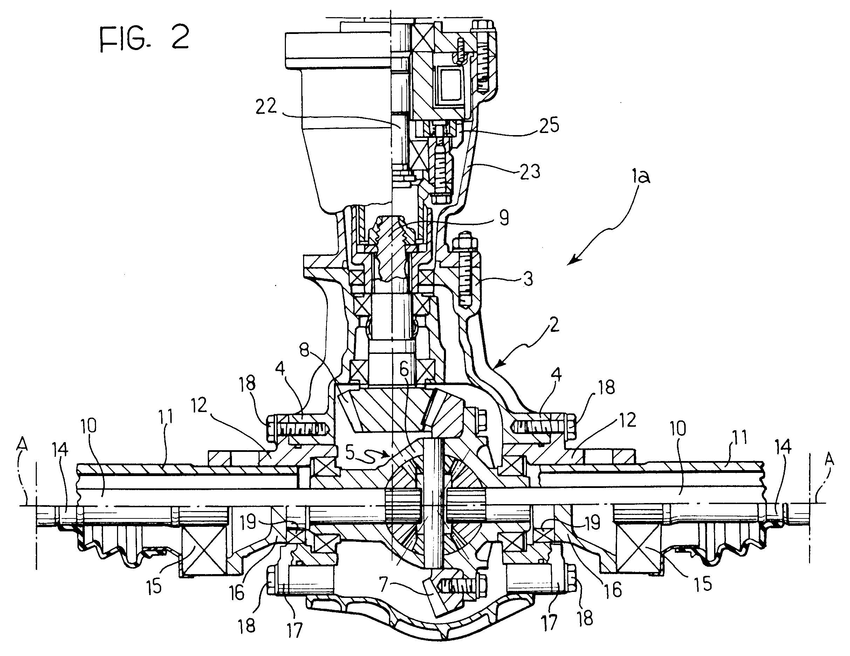

The variants shown in Figures 2 to 5 are generally similar to the embodiment described above with reference to Figure 1 and only the differences will be described in detail with the use of the same numerals for identical or similar parts.

In the embodiment of Figure 2, the axle, indicated 1a, differs from that described above solely in that the toothed coupling 20 is replaced by an electromagnetic coupling 25 of known type which can be operated to connect and disconnect the intermediate shaft 22 for rotation with the input shaft 9.

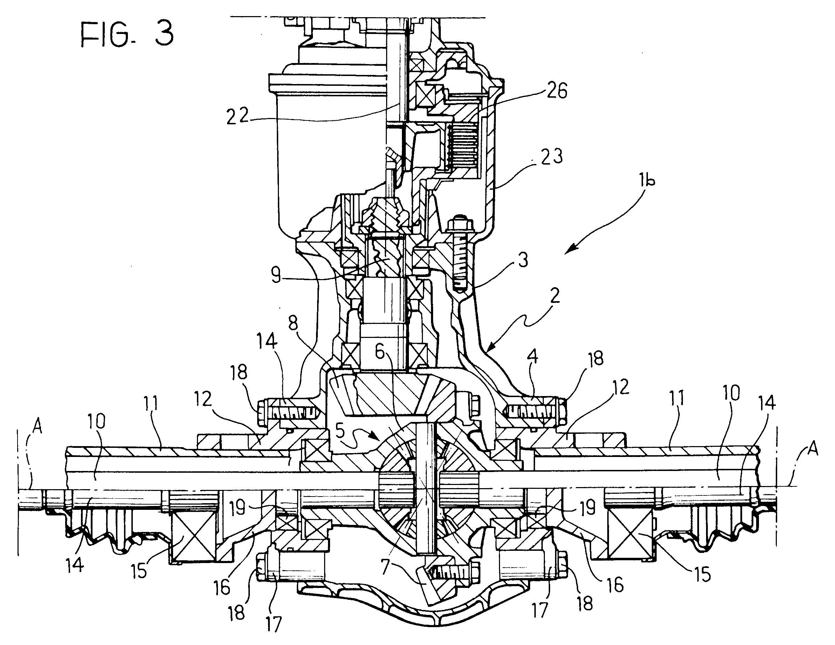

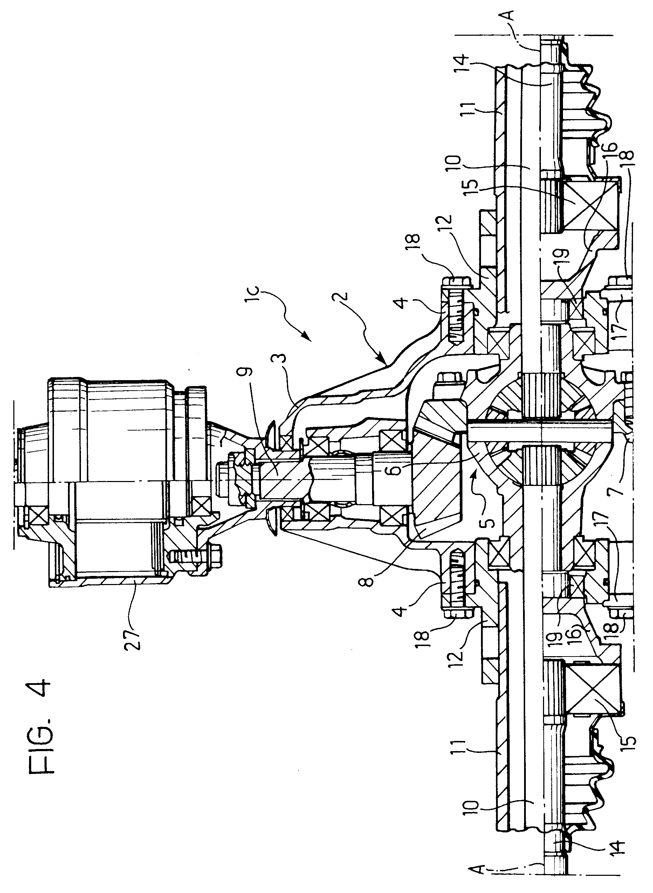

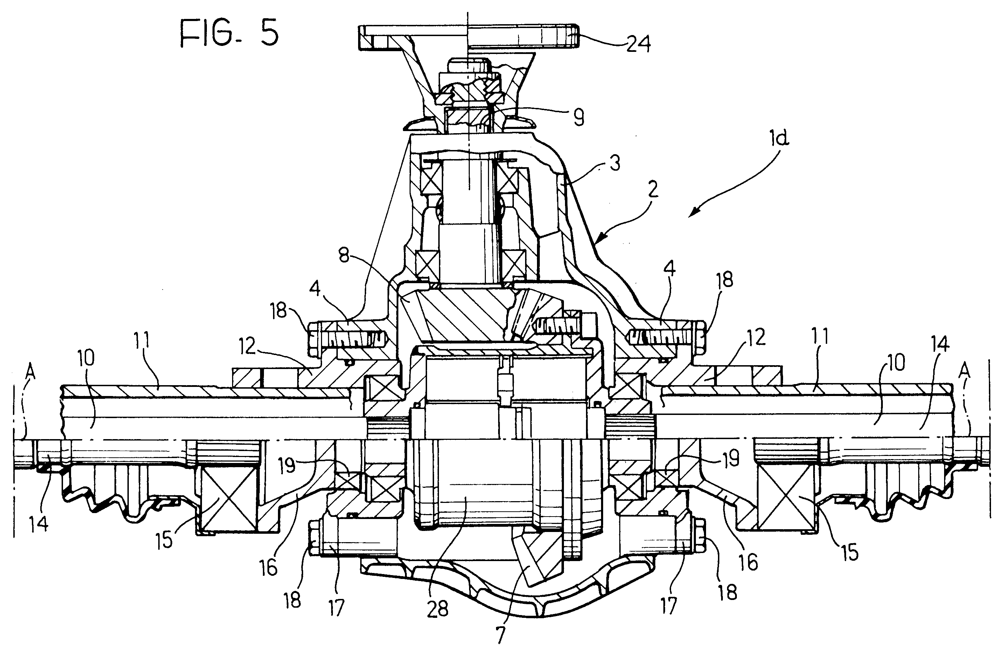

In the embodiment of Figure 3, however, the axle, indicated 1b, uses an electronically-controlled friction clutch 26 of known type for transmitting the driving torque from the intermediate shaft 22 to the intput shaft 9 whilst, in the embodiment of Figure 4, the axle, indicated 1c, uses a viscous coupling 27, also of known type, for this function. Finally, the axle 1d shown in Figure 5 uses a "torque splitter" viscous coupling 28 of known type, which replaces the epicyclic differential 5, for engaging and disengaging the driving torque for transmission to the drive shafts 10 or 14. In this case, the flange 24 for connection to the propeller shaft is fixed directly to the input shaft 9.

Naturally, the details of construction and forms of embodiment may be varied widely with respect to those described and illustrated, without thereby departing from the scope of the present invention.

## Claims

1. A rear axle (1) for transmitting the driving torque to the rear wheels of a motor vehicle with disengageable four-wheel drive, including a differential (5, 28) for dividing the drive between the rear wheels, an input shaft (9) for rotating the differential by means of a pair of bevel gears (7, 8), means (9, 25, 26, 27, 28) for engaging and disengaging the driving torque for transmission to the differential by the input shaft (9) and a casing (2) which houses the differential (5, 28) and the pair of bevel gears (7, 8) and has a tubular front appendage (3) for supporting the input shaft (9) for rotation and two annular side bosses (4) for the connection of the differential to the rear-wheel drive shafts (10, 14), characterised in that interchangeable annular attachments (12, 17) of a first type and a second type respectively are provided which can be fixed selectively to the side bosses (4) and enable the casing (2) to be used equally well for the rigid configuration of the axle (1) and for the configuration with independent wheel suspension.

2. An axle according to Claim 1, in which, in the rigid configuration of the axle (1), the two drive shafts (10) are connected directly for rotation with the differential (5, 28) and extend in respective tubular supports (11), characterised in that the attachments (12) of the first type connect the bosses (4) of the casing (2) to the tubular supports (11).

3. An axle according to Claim 1, in which, in the independent-wheel configuration of the axle (1), the two drive shafts (14) are connected for rotation with respective output members (16) of the differential (5, 28) in an articulated manner by means of respective universal joints (15), characterised in that the attachments (17) of the second type carry seals (19) associated with the output members (16).

4. An axle according to Claim 2, or Claim 3, characterised in that the differential (5) is of the epicyclic type with bevel gears.

5. An axle according to Claim 4, characterised in that the engagement and disengagement means comprise a toothed coupling (20) associated with the input shaft (9).

6. An axle according to Claim 4, characterised in that the engagement and disengagement means comprise an electromagnetic coupling (25) associated with the input shaft (9).

7. An axle according to Claim 4, characterised in that the engagement and disengagement means comprise an electronically-controlled friction clutch (26) associated with the input shaft (9).

8. An axle according to Claim 4, characterised in that the engagement and disengagement means comprise a viscous coupling (27) associated with the input shaft (9).

9. An axle according to Claim 2 or Claim 3, characterised in that the differential is constituted by a viscous coupling (27) of the "torque splitter" type.

## Patentansprüche

1. Hinterachse (1) zum Übertragen des Antriebsdrehmomentes zu den Hinterrädern eines Kraftfahrzeuges mit abschaltbarem Vierradantrieb, umfassend ein Differential (5, 28) zum Aufteilen des Antriebes auf die Hinterräder, eine Eingangswelle (9) für den Drehantrieb des Differentials mittels zweier Kegelzahnräder (7, 8), Mittel (9, 25, 26, 27, 28) zum Zuschalten und Abschalten des von der Antriebswelle (9) auf das Differential zu übertragenden Antriebsdrehmomentes, und ein Gehäuse (2), welches das Differential (5, 28) und die beiden Kegelzahnräder (7, 8) aufnimmt und welches einen rohrförmigen vorderen Fortsatz (3) für die Drehlagerung der Eingangswelle (9) sowie zwei ringförmige seitliche Ansätze (4) für die Verbindung des Differentials mit den Hinterrad-Antriebswellen (10, 14) aufweist,
**dadurch gekennzeichnet**, daß austauschbare ringförmige Ansatzstücke (12, 17) jeweils von einem ersten Typ und einem zweiten Typ vorgesehen sind, die wahlweise an den seitlichen Ansätzen (4) befestigbar sind und es ermöglichen, daß das Gehäuse (2) gleich gut für die starre Konfiguration der Achse (1) und für die Konfiguration mit unabhängigen Radaufhängungen verwendbar ist.

2. Achse nach Anspruch 1, bei der bei der starren Konfiguration der Achse (1) die beiden Antriebswellen (10) direkt mit dem Differential (5, 28) drehverbunden sind und sich in jeweiligen rohrförmigen Lagern (11) erstrecken,
**dadurch gekennzeichnet**, daß die Ansatzstücke (12) des ersten Typs die Ansätze (4) des Gehäuses (2) mit den rohrförmigen Lagern (11) verbinden.

3. Achse nach Anspruch 1, bei welcher bei der Konfiguration der Achse (1) mit unabhängigen Rädern die beiden Antriebswellen (14) mit jeweiligen Ausgangselementen (16) des Differentials (5, 28) gelenkig über jeweilige Universalgelenke (15) drehverbunden sind,
**dadurch gekennzeichnet**, daß die Ansatzstücke (17) des zweiten Typs Dichtungen (19) tragen, die den Ausgangselementen (16) zugeordnet sind.

4. Achse nach Anspruch 2 oder 3,
**dadurch gekennzeichnet**, daß das Differential (5) vom epizykloiden Typ mit Kegelzahnrädern ist.

5. Achse nach Anspruch 4,
**dadurch gekennzeichnet**, daß die Mittel zum Zuschalten und Abschalten eine Zahnkupplung (20) umfassen, die der Eingangswelle (9) zugeordnet ist.

6. Achse nach Anspruch 4,
**dadurch gekennzeichnet**, daß die Mittel zum Zuschalten und Abschalten eine elektromagnetische Kupplung (25) umfassen, die der Eingangswelle (9) zugeordnet ist.

7. Achse nach Anspruch 4,
**dadurch gekennzeichnet**, daß die Mittel zum Zuschalten und Abschalten eine elektronisch gesteuerte Reibkupplung (26) umfassen, die der Eingangswelle (9) zugeordnet ist.

8. Achse nach Anspruch 4,
**dadurch gekennzeichnet**, daß die Mittel zum Zuschalten und Abschalten eine Viskosekupplung (27) umfassen, die der Eingangswelle (9) zugeordnet ist.

9. Achse nach Anspruch 2 oder 3,
**dadurch gekennzeichnet**, daß das Differential durch eine Viskosekupplung (27) vom "Drehmomententeiler"-Typ ist.

## Revendications

1. Essieu arrière (1) servant à transmettre le couple d'entraînement aux roues arrière d'un véhicule automobile à transmission intégrale débrayable comprenant un différentiel (5, 28) servant à partager la force motrice entre les roues arrière, un arbre d'entrée (9) servant à faire tourner le différentiel au moyen d'un couple de roues dentées coniques (7, 8), des moyens (9, 25, 26, 27, 28) servant à embrayer et débrayer la transmission du couple d'entraînement au différentiel par l'arbre d'entrée (9) et un carter (2) qui renferme le différentiel (5, 28) et le couple de roues dentées coniques (7, 8) et possède un appendice frontal tubulaire (3) servant à supporter l'arbre d'entrée (9) en rotation, et deux bossages latéraux annulaires (4) servant à relier le différentiel aux arbres de transmission (10, 14) des roues arrière, caractérisé en ce qu'il est prévu des fixations annulaires interchangeables (12, 17) d'un premier type et d'un deuxième type respectivement qui peuvent être fixées sélectivement aux bossages latéraux (4) et qui rendent le carter (2) utilisable aussi bien pour la configuration rigide de l'essieu (1) que pour la configuration avec suspension à roues indépendantes.

2. Essieu selon la revendication 1, dans lequel, dans la configuration rigide de l'essieu (1), les deux arbres de transmission (10) sont accouplés directement en rotation au différentiel (5, 28) et s'étendent dans des supports tubulaires respectifs (11), caractérisé en ce que les fixations (12) du premier type relient les bossages (4) du carter (2) aux supports tubulaires (11).

3. Essieu selon la revendication 1, dans lequel, dans la configuration à roues indépendantes de l'essieu (1), les deux arbres de transmission (14) sont accouplés en rotation à des éléments de sortie respectifs (16) du différentiel (5, 28), dans un mode articulé, à l'aide de joints universels (15) respectifs, caractérisé en ce que les fixations (17) du deuxième type portent des garnitures d'étanchéité (19) qui sont associées aux éléments de sortie (16).

4. Essieu selon la revendication 2 ou la revendication 3, caractérisé en ce que le différentiel (5) est du type épicycloïdal à pignons coniques.

5. Essieu selon la revendication 4, caractérisé en ce que les moyens d'embrayage et de débrayage comprennent un embrayage à denture (20) associé à l'arbre d'entrée (9).

6. Essieu selon la revendication 4, caractérisé en ce que les moyens d'embrayage et de débrayage comprennent un embrayage électromagnétique (25) associé à l'arbre d'entrée (9).

7. Essieu selon la revendication 4, caractérisé en ce que les moyens d'embrayage et de débrayayge comprennent un embrayage à friction (26) à commande électronique associé à l'arbre d'entrée (9).

8. Essieu selon la revendication 4, caractérisé en ce que les moyens d'embrayage et de débrayage comprennent un coupleur à frottement visqueux (27) associé à l'arbre d'entrée (9).

9. Essieu selon la revendication 2 ou la revendication 3, caractérisé en ce que le différentiel est constitué par un coupleur à frottement visqueux (27) du type "diviseur de couple".
